# EUROPEAN PATENT APPLICATION

(11) **EP 1 150 511 A1**
(43) Date of publication of application: **31.10.2001**
(21) Application number: 01303272.7
(22) Date of filing: 06.04.2001
(51) Int. Cl.: H04N 7/24

(54) **Information processing apparatus and method**

(30) Priority: 13.04.2000 JP 2000112414; 29.03.2001 JP 2001097034
(71) Applicant: CANON KABUSHIKI KAISHA, Tokyo (JP)
(72) Inventor: Nakagawa, Toshiyuki, c/o Canon Kabushiki Kaisha, Tokyo (JP)
(74) Representative: Beresford, Keith Denis Lewis

(57) **Abstract**

An MPEG-4 bitstream, which contains one or a plurality of encoded object data and management information for managing them, is input from a transmission path (1), and is demultiplexed by a demultiplexer (2) into object data. An IPMP controller (20) extracts time limit information that pertains to a time limit for the one or plurality of object data from the management information, and controls the reproduction process of the one or plurality of object data on the basis of the extracted time limit information, thus preventing excess use of a predetermined object set with a time limit upon decoding information from a bitstream containing a plurality of object data.

## Description

### FIELD OF THE INVENTION

The present invention relates to an information processing apparatus and method for demultiplexing and decoding a bitstream, which contains one or a plurality of encoded object data and management information for managing them, in units of object data, and multiplexing and outputting one or a plurality of decoded object data.

### BACKGROUND OF THE INVENTION

In recent years, as a scheme for combining multimedia data containing a plurality of object data such as moving picture objects, audio objects, and the like, and transmitting them as a single bitstream, so-called MPEG-4 is standardized. The receiving side (reproduction side) of MPEG-4 reproduces, e.g., audio and video picture scenes in association with each other. In such MPEG-4 player, various use limitations must be imposed on all or some data to protect intellectual properties (including copyrights).

A bitstream specified by MPEG-4 mentioned above has a function of independently transmitting/receiving many video scenes and video objects on a single bitstream unlike a conventional multimedia stream. Also, as for audio data, many object data can be decoded from a single bitstream. That is, a bitstream that contains a plurality of object data like an MPEG-4 stream contains BIFS (Binary Format for Scenes) which is specified by expanding VRML (Virtual Reality Modeling Language) to cover natural moving picture and audio data. Note that BIFS is information that describes MPEG-4 scenes as binary data.

Since objects required for scene composition are individually encoded and sent, they are also individually decoded on the decoding side, and a scene is composited and reproduced by synchronizing the time axes of individual data with the time axis of a player in accordance with the BIFS description.

### SUMMARY OF THE INVENTION

Since an MPEG-4 player composites a plurality of objects, use limitations of intellectual properties may be imposed on individual objects. For this purpose, a system for obtaining authentication information that pertains to intellectual property use in units of objects is proposed.

In general, when, for example, a time limit is set as an example of use limitations on multimedia data which are distributed via a network or storage media such as CD-ROMs or the like, a process for appending information that pertains to the time limit (to be referred to as time limit information) as a file or modifying data by embedding such information as a digital watermark is required.

The receiving side, i.e., the player side, extracts the time limit information from the appended file or modified data, and limits reproduction or execution on the basis of the relationship between the extracted information and time information read from an internal timepiece unit of a computer or player.

The time limit may be set for whole conventional multimedia data so as to prevent excess use, and/or a time limit may be set to prevent excess use for a specific object of multimedia data made up of a plurality of objects like an MPEG-4 bitstream.

According to one aspect of the present invention, there is provided an information processing apparatus for demultiplexing and decoding a bitstream which contains one or a plurality of encoded object data, and management information for managing the encoded object data, and reproducing one or a plurality of decoded object data, comprising:
extraction means for extracting, from the management information, time limit information which pertains to a time limit set for the one or plurality of object data; and
control means for controlling a reproduction process of the one or plurality of object data on the basis of the time limit information.

An embodiment of the invention prevents excess use of a predetermined object set with a time limit upon decoding information from a bitstream containing a plurality of object data.

Features and advantages of embodiments will be apparent from the following description taken in conjunction with the accompanying drawings, in which like reference characters designate the same or similar parts throughout the figures thereof.

### BRIEF DESCRIPTION OF THE DRAWINGS

Fig. 1 is a schematic block diagram showing the arrangement of an MPEG-4 player according to the first embodiment of the present invention;
Fig. 2 is a block diagram showing an example of the arrangement of an IPMP controller 20 shown in Fig. 1;
Fig. 3 is a flow chart showing the operation of the MPEG-4 player according to the first embodiment of the present invention;
Fig. 4 is a flow chart showing the operation of an MPEG-4 player according to the second embodiment of the present invention;
Fig. 5 is a block diagram showing the arrangement of a computer according to the third embodiment of the present invention;
Fig. 6 shows an example of the data structure when IPMP information is appended to a plurality of objects in the first embodiment of the present invention; and
Fig. 7 shows an example of the IPMP data structure in the first embodiment of the present invention.

### DETAILED DESCRIPTION OF THE PREFERRED EMBODIMENTS

Preferred embodiments of the present invention will be described hereinafter with reference to the accompanying drawings.

### [First Embodiment]

As the first embodiment, the arrangement and operation of an information processing apparatus that limits reproduction of individual object data on the basis of information which pertains to a time limit (to be referred to as "time limit information" hereinafter) contained in management information when a bitstream which contains a plurality of object data and management information specified by MPEG-4 is input and is decomposed and decoded in units of object data will be explained below.

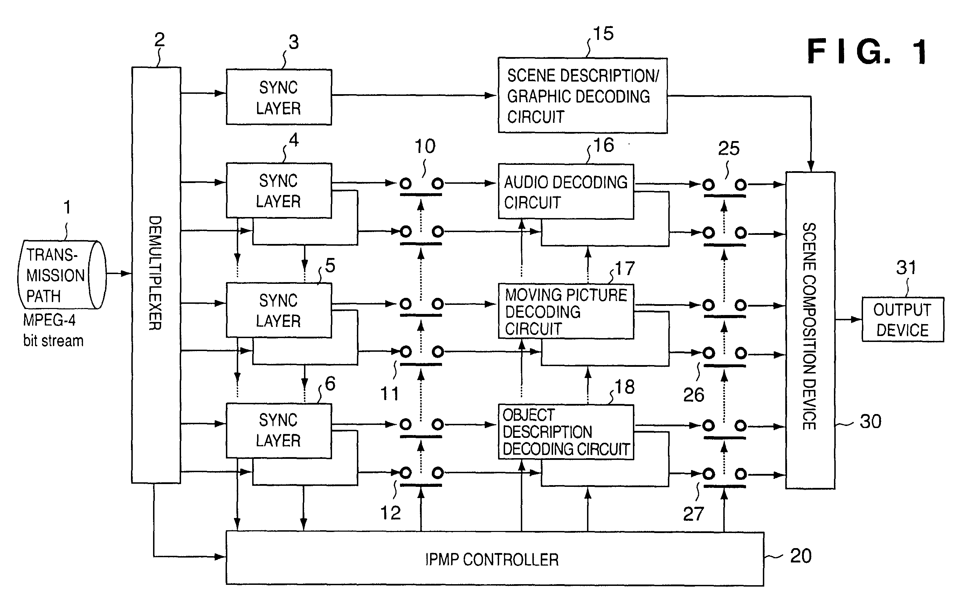

Fig. 1 is a schematic block diagram showing the arrangement of an MPEG-4 player as the information processing apparatus of this embodiment. The arrangement of the MPEG-4 player will be explained using Fig. 1, and a method of preventing excess use of a predetermined object set with a time limit by the MPEG-4 player will be explained.

Referring to Fig. 1, reference numeral 1 denotes a transmission path of various networks, via which an MPEG-4 bitstream is delivered. Note that the transmission path 1 of this embodiment indicates not only communication paths such as a broadcast network, communication network and the like, but also storage media themselves such as a DVD-RAM and the like.

Upon receiving an MPEG-4 stream delivered from a network via the transmission path 1 or an MPEG-4 stream read from the storage medium via the transmission path 1, the MPEG-4 player inputs that stream to a demultiplexer 2. The demultiplexer 2 demultiplexes the received MPEG-4 bitstream into scene description data containing graphic data, audio object data (audio bitstream), moving picture object data (moving picture bitstream), object description data, and the like, and inputs them to processing circuits 3 to 6 of corresponding processing layers.

Note that audio object data has been encoded (compressed) by e.g., known CELP (Code Excited Linear Prediction) coding, transform-domain weighted interleave vector quantization (TWINVQ) coding, or the like. Also, the moving picture object data has been encoded by, e.g., known MPEG-2, H-263, or the like. The object description data includes, e.g., animation or the like and is similarly encoded in a format suitable for each description data. The object description data is required for nodes that refer to audio and moving picture streams in the scene description data, and has control information (encoding method, correspondence with scene description, packet format, intellectual property management information, and the like) of designated streams.

In the sync layer processing circuits 3 to 6, since the scene description data, audio objects, moving picture objects, object description data, and the like have been encoded (compressed) or the like, they are decoded by decoding circuits 15 to 18 in units of objects.

Note that this embodiment assumes an apparatus which can decode even when the MPEG-4 bitstream contains a plurality of different types of objects in each of audio objects, moving picture objects, and object description data. For this reason, a plurality of sets of sync layer processing circuits and decoding circuits are prepared in correspondence with audio objects, moving picture objects, and object description data.

The audio objects, moving picture objects, and object description data respectively decoded by the decoding circuits 16, 17, and 18 are input to a scene composition (device) circuit 30 to reproduce scenes, on the basis of scene description information decoded by the scene description/graphic decoding circuit 15. A finally obtained multimedia data sequence is supplied to an output device 31 represented by a display, loudspeaker, printer, or the like, and is reproduced.

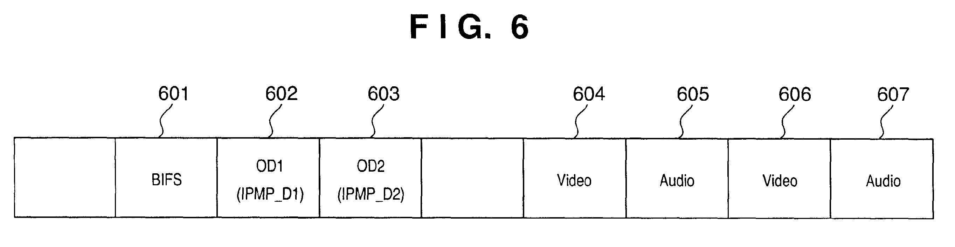

In the received data stream (MPEG-4 bitstream) in this embodiment, since reproduction control for protection of intellectual properties and the like of individual audio and moving picture objects that form a scene is required, intellectual property management information (to be referred to as IPMP (Intellectual Property Management and Protection) information hereinafter) described in, e.g., Japanese Patent Application No. 10-295937 is appended to the bitstream. The IPMP information is contained in the aforementioned object description data. Fig. 6 shows an example of the data structure of the overall MPEG-4 bitstream. Reference numeral 601 denotes BIFS mentioned above, which stores scene description data. Reference numerals 602 and 603 denote object description data, which describe control information for subsequent object data. In the example shown in Fig. 6, two object description data 602 (OD1) and 603 (OD2) are contained, and respectively contain information for controlling moving picture object data (604, 606), and audio object data (605, 607). Note that OD1 and OD2 respectively contain IPMP information (IPMP_D1) that pertains to moving picture object data, and IPMP information (IPMP_D2) that pertains to audio object data.

In the player of this embodiment, the demultiplexer 2 extracts such IPMP information and supplies the extracted information to an IPMP controller 20. The IPMP controller 20 makes reproduction control of individual objects by intercepting objects at access points 10, 11, and 12 or 25, 26, and 27, superposing a disturbance signal on objects, decoding encrypted objects, or stopping reproduction of individual objects by accessing the decoding circuits 16, 17, and 18. In this manner, even when a bitstream containing copyrighted contents is input, its reproduction can be blocked.

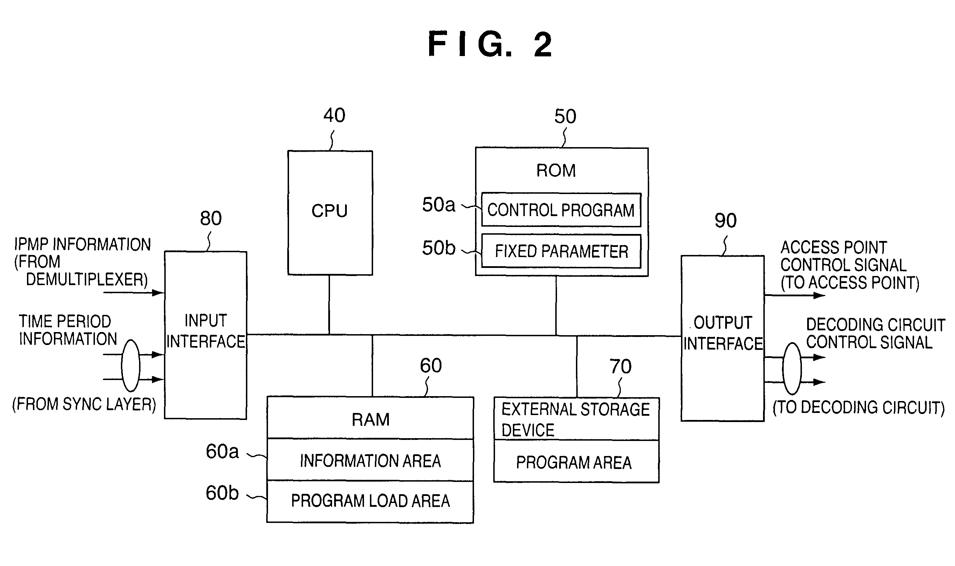

Fig. 2 is a block diagram showing an example of the arrangement of the IPMP controller 20 shown in Fig. 1.

Referring to Fig. 2, reference numeral 40 denotes a CPU for arithmetic operations and control, which controls the IPMP controller 20; and 50, a ROM for storing a control program 50a for controlling the overall IPMP controller 20, fixed parameters 50b, and the like. Reference numeral 60 denotes a RAM which is used by the CPU 40 as a temporary storage, and includes an information area 60a for storing IPMP information, and a program load area 60b that stores a program loaded from an external storage device 70. Reference numeral 70 denotes an external storage device which stores a program installed using a storage medium such as a floppy disk, CD-ROM, or the like, and stores the program to be loaded onto the program load area 60b.

Reference numeral 80 denotes an input interface which inputs IPMP information from the demultiplexer 2, and time information from the sync layers 4 to 6. Reference numeral 90 denotes an output interface for outputting access point control signals to access points 10 to 12 and 25 to 27, and decoding circuit control signals to the decoding circuits 16 to 18.

In this embodiment, the IPMP controller 20 has been exemplified as an independent processor element, but may be implemented by controlling some or all components of the MPEG-4 player using the CPU 40 or by software, as is known to those who are skilled in the art.

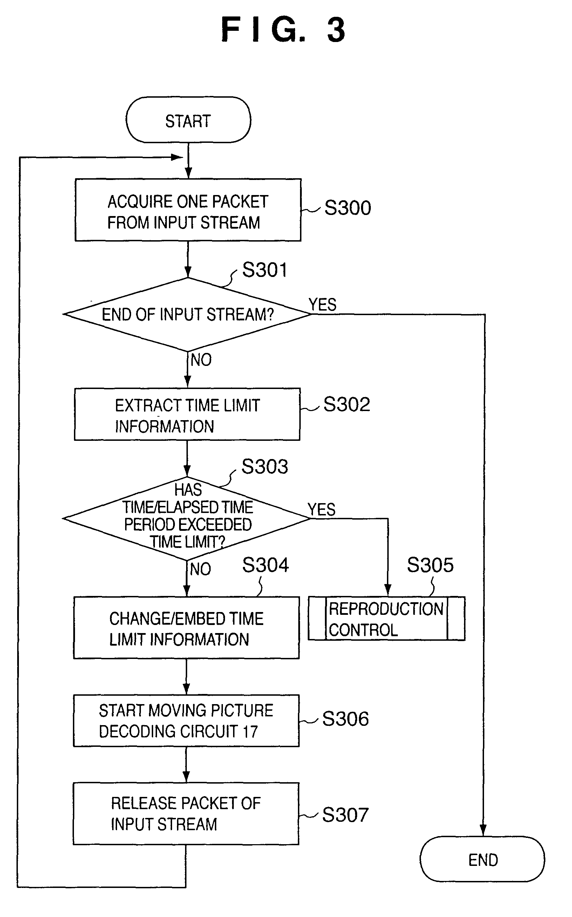

The operation of the MPEG-4 player according to this embodiment, especially, the operation when IPMP information is used, will be described in detail below using the flow chart in Fig. 3.

Fig. 3 is a flow chart for explaining the operation of the IPMP controller 20 when the MPEG-4 player receives an MPEG-4 bitstream. Assume that the MPEG-4 bitstream contains, for example, objects moving picture data and IPMP information that contains time limit information which pertains to the moving picture data.

In this case, the IPMP controller 20 specifies an encoded moving data object area demultiplexed by the demultiplexer 2 and sets data for one packet of that object as an input stream in step S300.

It is then checked in step S301 if the input stream has reached its terminal end. If the terminal end of the bitstream is detected, i.e., a moving picture bitstream to be controlled has reached its terminal end, the process ends; otherwise, the flow advances to step S302.

In step S302, a time limit information field is specified and extracted from an IPMP bitstream demultiplexed by the demultiplexer 2.

More specifically, the IPMP information describes IPMP object type designation at its beginning, which has the following specification in FDIS of MPEG-4 Part1:Systems:

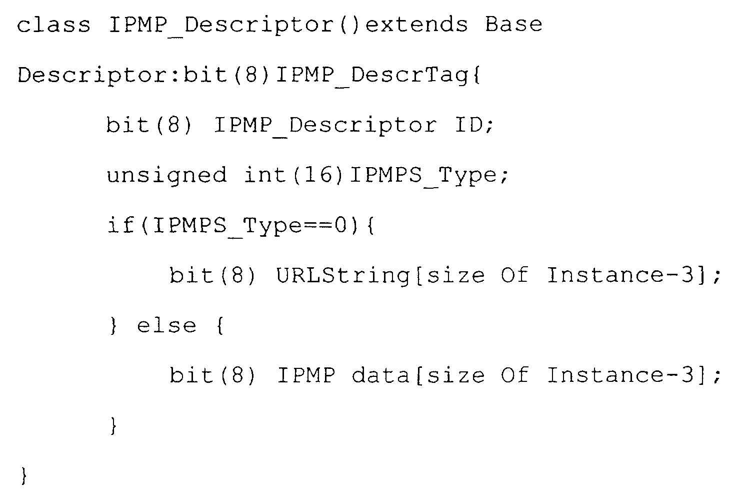

IPMPS_Type indicates the type of IPMP controller 20; if IPMPS_Type = 0, information for protecting and managing intellectual properties is present at a location designated by the URLString.

Values other than IPMPS_Type = 0 are registered in RA (Registration Authority), and information for protecting and managing intellectual properties are described in IPMP_data.

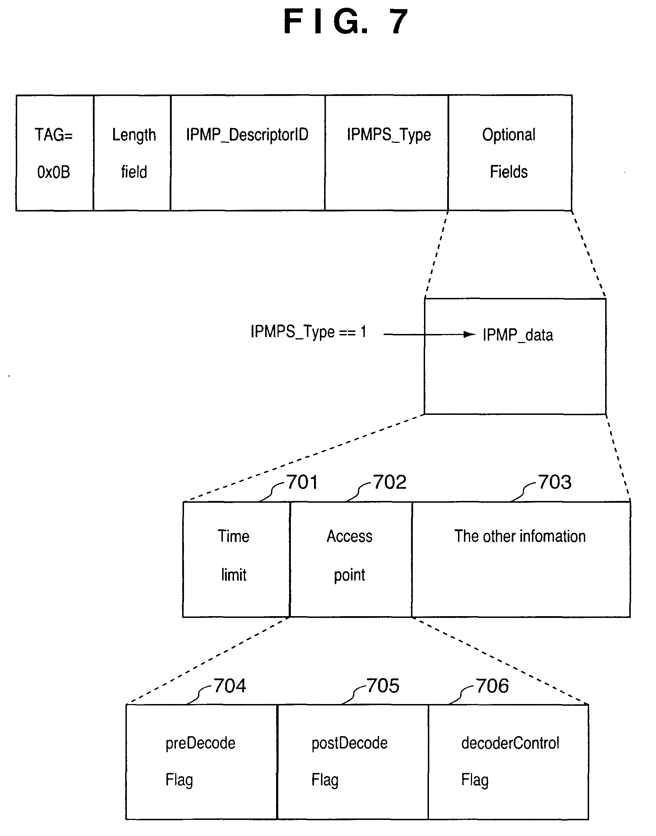

The IPMP controller 20 identifies IPMPS_Type in the IPMP information and can determine the control method of an object to be protected/managed by referring to URLString, IPMP_data, or the like. The syntax in IPMP_data is not standardized yet, and IPMP_data in this embodiment is comprised of a time limit information field 701, access point designation field 702, and other management information field 703, as shown in Fig. 7. Note that such time limit information, access points, and various other management information are determined by the copyright holder or contents provider.

In this embodiment, the time limit information is a total of browsing, display, or reproduction time periods since the first browsing, display, or reproduction time of the contents of a moving picture bitstream. Alternatively, the time limit information may be a predetermined time period since the first browsing, display, or reproduction time of a bitstream. In this case, the time limit information contains a time obtained by adding the predetermined period of time to the first browsing, display, or reproduction time of a bitstream. Alternatively, the time limit information may be a predetermined specific time, and may contain that specific time in such case.

In step S303, it is checked with reference to the time limit information in an IPMP_data area extracted in the previous step if the time limit of a moving picture bitstream corresponding to the time limit information has expired. If the time limit has not expired yet, the flow advances to step S304; otherwise, the flow advances to step S305 to limit reproduction of the moving picture bitstream.

The process for checking if the time limit has expired is executed by computing the use time period of the moving picture bitstream on the basis of the time read from a timepiece that provides a standard time via a network, and comparing the total use time period (the use time period so far + the currently computed use time period) of the moving picture bitstream and the time limit. Alternatively, when the time limit information is a predetermined period of time since the first browsing, display, or reproduction time of the bitstream contents, the aforementioned process is executed by comparing the time read from the timepiece with the time limit information. On the other hand, when the time limit information is a predetermined specific time, the aforementioned process is executed by comparing the time read from the timepiece with the specific time. The time source may be an internal timepiece of a computer that does not permit any tampering, or may be an internal timepiece of the MPEG-4 player.

In step S304, the contents of the time limit information are changed if required, and only the required changed contents are embedded in the time limit information field 701 in the IPMP bitstream; if such change is not required, the flow advances to step S306 without any process. In this embodiment, since the time limit information is given as a total of browsing, display, and reproduction time periods of the moving picture bitstream, the elapsed time during reproduction is counted, and the result obtained by subtracting that counted time period from the time limit information is embedded as new time limit information in the time limit information field 701 in the source IPMP bitstream, thus changing (updating) the time limit of an object (moving picture object in this embodiment) to be controlled every time it is reproduced.

The IPMP controller 20 can determine the reproduction control method in step S305 in accordance with the format of the IPMP information.

In an example of the control method, access points are extracted from the access point designation field 702 of the IPMP_data area. The access point designation field 702 is made up of a flag 704 which points to an input stage of the decoding circuit, a flag 705 which points to an output stage of the decoding circuit, and a flag 706 which points to the decoding circuit itself, and an access point to be controlled can be specified by a flag set with a value = 1. That is, an access point specifies the control position of the IPMP controller 20 so as to control decoding and reproduction of objects transmitted onto the transmission path 1 and, more particularly, it points to the input or output stages of the decoding circuits 16, 17, and 18, i.e., the access points 10, 11, and 12, or 25, 26, and 27, or the decoding circuits- 16, 17, and 18. In this embodiment, since IPMP information is appended to a moving picture object, the access point in this case is one of the input stage 11 or output stage 26 of the moving picture decoding circuit, and moving picture decoding circuit 17. The IPMP controller 20 intercepts the bitstream, superposes a disturbance signal, decodes an encrypted bitstream, or stops the operations of the decoding circuits at the designated access point, and can determine the control method in such case in accordance with various kinds of management information extracted from the other management information field 703 of the IPMP_data area. Hence, even when a moving picture bitstream containing copyrighted contents is input, its reproduction can be blocked.

In step S306, the moving picture decoding circuit 17 is started up (or its operation is continued) to decode the moving picture bitstream.

In step S307, the packet of the input stream acquired in step S300 is released, and the flow returns to step S300 to proceed with execution.

Note that the IPMP information is not limited to information that pertains to limitations on the time limit, but may include a combination of various kinds of management information for controlling the MPEG-4 player. For example, the IPMP information may be a limitation of a user of this MPEG-4 player, a limitation on an access device (peripheral device) to MPEG-4, authentication information such as a descramble key, or the like.

Furthermore, in this embodiment, the MPEG-4 bitstream is comprised of a bitstream of moving picture data in units of packets, and that of IPMP information of that moving picture data. In addition to the moving picture data, IPMP information can be appended to object data that form the moving picture data, and audio data. Hence, an object for which the time limit is set and which undergoes excess use control is not limited to the moving picture object, and the present invention can be applied to object data that form the moving picture data, and audio data.

Therefore, the MPEG-4 player as an information processing apparatus of this embodiment and its control method can prevent excess use of a predetermined object set with the time limit upon decoding information from a data stream containing a plurality of object streams.

### [Second Embodiment]

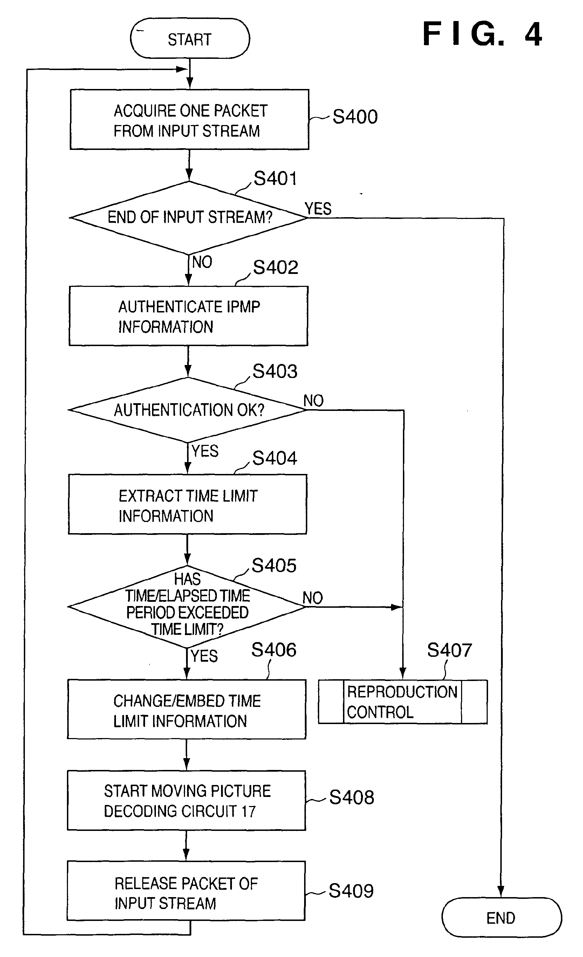

In the first embodiment shown in Fig. 3, after the time limit information in the IPMP information is extracted and analyzed, reproduction control of an object to be controlled is made using another management information (IPMPS_Type). Alternatively, the object of the first embodiment can also be achieved by the arrangement that authenticates management information other than the time limit first, and the operation in this case is as shown in the flow chart of Fig. 4.

In such case, before extracting time limit information in step S404, IPMP information is authenticated with reference to IPMPS_Type and URLString or IPMP_data in step S402.

Authentication is made to confirm if the user is authentic, has paid a fee, or the like. For example, a user interactive method for making the user input a password that only an authentic user knows, or insert a smart card may be used.

It is checked in step S403 if the user is authentic. If YES in step S403, the flow advances to step S404 to authenticate and control the time limit information; otherwise, the flow advances to step S407 to control reproduction. The subsequent processes are the same as those in the flow chart shown in Fig. 3.

As described above, according to the arrangement of this embodiment that authenticates management information other than the time limit first, excess use of a predetermined object set with the time limit can be prevented upon decoding information from a data stream containing a plurality of object streams.

### [Third Embodiment]

In the first and second embodiments, a method of preventing excess use of a predetermined object set with the time limit using the MPEG-4 player has been explained. Such method can also be implemented by software which runs on a computer.

In this case, the program code of the flow chart shown in Fig. 3 or 4 is read from an external storage device onto a RAM, and the CPU executes that program code to implement the method.

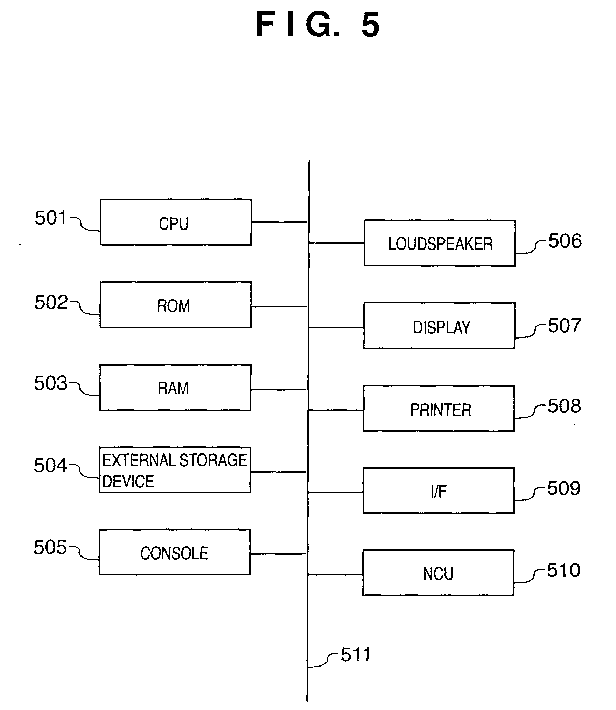

Fig. 5 shows the arrangement of a computer in this embodiment, and the arrangement will be explained below.

Reference numeral 501 denotes a CPU for controlling the entire computer by executing the method using the program code and data stored in a RAM 503.

Reference numeral 502 denotes a ROM which stores a startup program of the computer, setups required after startup, and the like, and also character codes and the like.

Reference numeral 503 denotes a RAM which stores the program code, data, and the like loaded from an external storage device 504, and is used as a work area when the CPU 501 executes a process using the program code and data.

Reference numeral 504 denotes an external storage device which saves a program code, data, and the like loaded from a storage medium such as a CD-ROM, floppy disk, or the like.

Reference numeral 505 denotes a console which comprises a keyboard and pointing device such as a mouse or the like, and allows the user to input various instructions to the computer.

Reference numeral 506 denotes a loudspeaker for outputting sound of data generated by the computer using a PCM sound source, FM sound source, or the like. Also, the loudspeaker 506 can output a decoded audio object as sound upon decoding the audio object by the computer.

Reference numeral 507 denotes a display unit which comprises a CRT display, liquid crystal display, or the like, can display system messages and the like from the computer, and can also display graphic-related objects contained in an MPEG-4 stream.

Reference numeral 508 denotes a printer which can print line image data processed by the computer onto a paper sheet via a printer driver installed in the computer.

Reference numeral 509 denotes an interface (to be abbreviated as I/F hereinafter) which can connect other peripheral devices (scanner, MIDI, and the like), and image and audio data can be output from this computer via the I/F 509.

Reference numeral 510 denotes an NCU which can output the aforementioned execution result of the computer onto a network or to another computer via a communication line. Also, the NCU 510 can receive data from the network or another computer.

Reference numeral 511 denotes a bus for connecting the aforementioned units.

With the computer which comprises the aforementioned arrangement, and the processing method of the respective unit, the computer of this embodiment can execute various processes in the first or second embodiment.

### [Other Embodiments]

Furthermore, the first to third embodiments are not limited to only the apparatus and method for implementing the aforementioned embodiments, and the scope of the first to third embodiments includes a case achieved by supplying a program code of software for implementing the above embodiments to a computer (CPU or MPU) in a system or apparatus, and controlling to operate various devices by the computer of the system or apparatus in accordance with the program code.

In this case, the program code itself of software implements the functions of the above-mentioned embodiments, and the program code itself, and means for supplying the program code to the computer (e.g., a storage medium which stores the program code) constitute the present invention.

As the storage medium for storing the program code, for example, a floppy disk, hard disk, optical disk, magneto-optical disk, CD-ROM, magnetic tape, nonvolatile memory card, ROM, and the like may be used.

Not only when the functions of the above embodiment are implemented by controlling various devices by the computer in accordance with the supplied program alone but also when the functions of the above embodiment are implemented by collaboration of the program code and an OS (operating system) running on the computer, another application software, or the like, such program code is included in the scope of the first to third embodiments.

Furthermore, when the supplied program code is stored in a memory equipped on a function extension board of the computer or a function extension unit connected to the computer, a CPU or the like equipped on the function extension board or unit executes some or all of actual processes on the basis of the instruction of that program code, and the functions of the above embodiment are implemented by those processes, such case is also included in the scope of the first to third embodiments.

When the first to third embodiments are applied to the aforementioned storage medium, that storage medium stores the program code corresponding to the flow chart mentioned above (shown in Fig. 3 or 4).

As described above, according to the above embodiments, excess use of a predetermined object set with the time limit can be prevented upon decoding information from a data stream containing a plurality of object streams.

As many apparently widely different embodiments of the present invention can be made without departing from the spirit and scope thereof, it is to be understood that the invention is not limited to the specific embodiments thereof except as defined in the appended claims.

## Claims

1. An information processing apparatus for demultiplexing and decoding a bitstream which contains one or a plurality of encoded object data, and management information for managing the encoded object data, and for controlling reproduction of one or a plurality of decoded object data, comprising:
extraction means for extracting, from the management information, time limit information which pertains to a time limit set for the one or plurality of object data; and
control means for controlling a reproduction process of the one or plurality of object data on the basis of the time limit information.

2. The apparatus according to claim 1, wherein the bitstream is an MPEG-4 bitstream, and the management information is IPMP information appended to the bitstream.

3. The apparatus according to claim 1, wherein the time limit information includes at least a time limit and a control method of the reproduction process.

4. The apparatus according to claim 3, wherein said control means comprises acquisition means for acquiring time period information for the one or plurality of object data, and controls the reproduction process of the one or plurality of object data in accordance with the time information and the time limit information.

5. The apparatus according to claim 4, wherein the time limit information is a total of browsing, display, or reproduction times since the first browsing, display, or reproduction time of contents of a bitstream of the object data.

6. The apparatus according to claim 4, wherein the time limit information is a predetermined time period since the first browsing, display, or reproduction time of contents of a bitstream of the object data.

7. The apparatus according to claim 4, wherein the time limit information is a specific time.

8. The apparatus according to claim 4, wherein said acquisition means acquires a time as the time period information from a timepiece that provides a standard time via a network.

9. The apparatus according to claim 4, wherein said acquisition means acquires a time as the time period information from an internal timepiece of an external computer which does not allow tampering.

10. The apparatus according to claim 4, further comprising measurement means for measuring time, and wherein said acquisition means acquires the time from said measurement means.

11. The apparatus according to claim 4, wherein said control means checks based on the time period information and the time limit information if a time limit of object data of interest has expired, and controls at least one of input, decoding, and reproduction of the object data of interest in accordance with the control method of the reproduction process, when the time limit has expired.

12. The apparatus according to claim 1, wherein said control means updates the time limit information in accordance with reproduction of the object data.

13. The apparatus according to claim 12, wherein said control means updates the time limit information as new time limit information by counting an elapsed time during browsing, display, or reproduction of the object data, and subtracting the counted elapsed time from the time limit information.

14. An information processing method for demultiplexing and decoding a bitstream which contains one or a plurality of encoded object data, and management information for managing the encoded object data, and for controlling reproduction of one or a plurality of decoded object data, comprising:
the extraction step of extracting, from the management information, time limit information which pertains to a time limit set for the one or plurality of object data; and
the control step of controlling a reproduction process of the one or plurality of object data on the basis of the time limit information.

15. The method according to claim 14, wherein the bitstream is an MPEG-4 bitstream, and the management information is IPMP information appended to the bitstream.

16. The method according to claim 14, wherein the time limit information includes at least a time limit and a control method of the reproduction process.

17. The method according to claim 16, wherein the control step comprises the acquisition step of acquiring time period information for the one or plurality of object data, and controls the reproduction process of the one or plurality of object data in accordance with the time information and the time limit information.

18. The method according to claim 17, wherein the time limit information is a total of browsing, display, or reproduction times since the first browsing, display, or reproduction time of contents of a bitstream of the object data.

19. The method according to claim 17, wherein the time limit information is a predetermined time period since the first browsing, display, or reproduction time of contents of a bitstream of the object data.

20. The method according to claim 17, wherein the time limit information is a specific time.

21. The method according to claim 17, wherein the acquisition step includes the step of acquiring a time as the time period information from a timepiece that provides a standard time via a network.

22. The method according to claim 17, wherein the acquisition step includes the step of acquiring a time as the time period information from an internal timepiece of an external computer which does not allow tampering.

23. The method according to claim 17, further comprising the measurement step of measuring time, and wherein the acquisition step includes the step of acquiring the time from the measurement step.

24. The method according to claim 17, wherein the control step includes the step of checking based on the time period information and the time limit information if a time limit of object data of interest has expired, and controlling at least one of input, decoding, and reproduction of the object data of interest in accordance with the control method of the reproduction process, when the time limit has expired.

25. The method according to claim 14, wherein the control step includes the step of updating the time limit information in accordance with reproduction of the object data.

26. The method according to claim 25, wherein the control step includes the step of updating the time limit information as new time limit information by counting an elapsed time during browsing, display, or reproduction of the object data, and subtracting the counted elapsed time from the time limit information.

27. A computer readable storage medium which stores a program code of an information processing method for demultiplexing and decoding a bitstream which contains one or a plurality of encoded object data, and management information for managing the encoded object data, and reproducing one or a plurality of decoded object data, comprising:
a code of the extraction step of extracting, from the management information, time limit information which pertains to a time limit set for the one or plurality of object data; and
a code of the control step of controlling a reproduction process of the one or plurality of object data on the basis of the time limit information.

28. A program for implementing an information processing method, comprising the steps of:
inputting a bitstream which contains one or a plurality of encoded object data, and management information for managing the object data;
demultiplexing the bitstream into object data;
extracting, from the management information, time limit information which pertains to a time limit set for the one or plurality of object data; and
controlling a reproduction process of the demultiplexed object data on the basis of the extracted time limit information.

29. A signal carrying instructions for causing a programmable processing apparatus to become operable to perform a method as set out in at least one of claims 14 to 26.
